Europäisches Patentamt

European Patent Office

Office européen des brevets

(19)

(11) Numéro de publication : **0 157 663**
**B1**

(12)

# FASCICULE DE BREVET EUROPÉEN

(45) Date de publication du fascicule du brevet :
23.03.88

(21) Numéro de dépôt : 85400329.0

(22) Date de dépôt : 22.02.85

(51) Int. Cl.⁴ : **G 01 P 15/02**, G 01 P 15/125,
G 01 P 15/13

(54) Capteur accélérométrique à structure pendulaire plane.

(30) Priorité : 06.03.84 FR 8403441

(43) Date de publication de la demande :
09.10.85 Bulletin 85/41

(45) Mention de la délivrance du brevet :
23.03.88 Bulletin 88/12

(84) Etats contractants désignés :
CH DE GB IT LI NL SE

(56) Documents cités :
DE-A- 3 038 660
DE-A- 3 220 412
GB-A- 1 562 766
GB-A- 2 101 336
GB-A- 2 102 579
US-A- 2 976 734

(73) Titulaire : **SOCIETE FRANCAISE D'EQUIPEMENTS POUR LA NAVIGATION AERIENNE (S.F.E.N.A.)**
B.P. 59 Aérodrome de Villacoublay
F-78140 Velizy Villacoublay (FR)

(72) Inventeur : **Marcillat, Gérard**
Rue A. Fradin
F-86100 Chatellerault (FR)

(74) Mandataire : **Marquer, Francis et al**
CABINET MOUTARD 35, avenue Victor Hugo Résidence Champfleury
F-78180 Voisins-le-Bretonneux (FR)

Jouve, 18, rue St-Denis, 75001 Paris, France

EP 0 157 663 B1

## Description

La présente invention concerne un capteur accélérométrique du type comprenant une structure pendulaire plane dans laquelle l'axe sensible est situé dans le plan de la structure, par opposition aux capteurs accélérométriques tels que celui décrit dans le brevet GB-A-2 101 336 dans lequel l'axe sensible est perpendiculaire au plan du corps d'épreuve.

Elle a plus particulièrement pour objet un capteur accélérométrique dans lequel la structure pendulaire peut être réalisée par micro-usinage d'une lame cristalline par exemple en silicium ou en quartz et comprend un corps d'épreuve plat suspendu par deux lames parallèles flexibles dans le plan dudit corps d'épreuve.

On sait que pour s'affranchir des effets produits par les composantes transversales des efforts exercés sur le corps d'épreuve et pour accroître la sensibilité du capteur selon son axe de mesure, les lames flexibles doivent être conçues de manière à présenter une raideur aussi faible que possible dans le plan de la structure et aussi élevée que possible perpendiculairement à ce plan. Ainsi, le brevet US-A-2 976 734 résout ce problème en utilisant dans une structure tridimensionnelle des lames flexibles qui s'étendent dans des plans perpendiculaires au plan du corps d'épreuve.

Toutefois, il s'avère qu'en raison de la nature spécifique du capteur précédemment défini, des propriétés mécaniques de la matière utilisée et des techniques de fabrication employées, il n'est pas possible de supprimer totalement l'incidence de ces composantes transversales, principalement dans le cas où l'on désire réaliser des capteurs à haute sensibilité.

Un premier but de l'invention est donc de concevoir une structure pendulaire du type de celle précédemment mentionnée, dont les formes géométriques permettent de réduire les contraintes transversales exercées sur les lames flexibles par le corps d'épreuve lorsque celui-ci se trouve soumis à des efforts transversaux (accélérations transversales).

Pour parvenir à ce résultat, l'invention propose une structure pendulaire du type comportant une partie fixe plane et un corps d'épreuve plat suspendu sur ladite partie fixe par deux lames parallèles flexibles dans le plan dudit corps d'épreuve, de manière à pouvoir se déplacer en translation selon un axe le long duquel on mesure l'accélération, ledit corps d'épreuve s'étendant au moins partiellement dans l'espace compris entre les deux lames flexibles.

Selon l'invention, ce capteur est plus particulièrement caractérisé en ce que la susdite partie fixe, le susdit corps d'épreuve et les susdites lames flexibles sont réalisés en une seule et même pièce obtenue par micro-usinage d'une lame cristalline, et en ce qu'en conséquence, ladite partie fixe, ledit corps d'épreuve et lesdites lames flexibles s'étendent dans un même plan

contenant ledit axe.

Par ailleurs, dans un capteur accélérométrique utilisant une structure telle que celle précédemment décrite, la détermination des accélérations implique nécessairement la détection des déplacements du corps d'épreuve.

L'invention a donc également pour but la réalisation de détecteurs capacitifs destinés à la mesure des déplacements en translation du corps d'épreuve, spécifiquement conçus pour la structure pendulaire précédemment décrite.

Selon un premier mode d'exécution de l'invention, ces détecteurs capacitifs de déplacement comprennent au moins une première armature de condensateur portée par au moins une zone de la tranche du corps d'épreuve sensiblement perpendiculaire à l'axe sensible du capteur, et une deuxième armature de condensateur portée par au moins une zone de la tranche de la partie fixe de l'élément pendulaire, parallèle à la première armature et faiblement distante de celle-ci. Ces deux armatures de condensateur peuvent être avantageusement obtenues par métallisation desdites zones de la tranche du corps d'épreuve et de la partie fixe de la structure pendulaire.

Selon un deuxième mode d'exécution de l'invention, les susdits détecteurs capacitifs font intervenir au moins une armature de condensateur, consistant en au moins une bande en matière électriquement conductrice, portée par une face du corps d'épreuve et au moins une seconde bande en matière électriquement conductrice s'étendant parallèlement à la première bande et faiblement distante de celle-ci, cette seconde bande étant portée par un bâti solidaire de la partie fixe de la structure pendulaire.

Dans les deux modes d'exécution précédemment décrits, les liaisons électriques entre les armatures de condensateur portées par le corps d'épreuve et le circuit électronique porté par la partie fixe de la structure pendulaire sont avantageusement réalisées par métallisation des faces minces des lames flexibles (parallèles au plan de la structure).

En plus des moyens de détection des déplacements en translation du corps d'épreuve, le capteur peut en outre comprendre un moteur de rappel contre-balançant l'action extérieure exercée sur le corps d'épreuve.

Ainsi, selon un autre mode de réalisation de l'invention, ce moteur utilise, d'une façon classique, la force de Laplace obtenue par l'action d'une induction magnétique sur un courant circulant dans une bobine imprimée à la périphérie d'au moins l'une des deux faces du corps d'épreuve.

Cette bobine peut être réalisée par des procédés connus tels que des dépôts métalliques, l'attaque chimique d'un dépôt uniforme, etc... Dans ce cas, les liaisons avec l'extérieur s'effectuent au moyen de plages conductrices, éventuellement obtenues par métallisation, portées par les faces minces des lames flexibles, qui ne sont pas utilisées pour la connexion électrique des armatures de condensateur. Pour éviter les chevauchements des liaisons électriques entre, d'une part, les armatures de condensateur et la bobine et, d'autre part, les plages conductrices portées par les lames souples, le corps d'épreuve peut comprendre au moins un passage métallisé entre ses deux faces permettant un agencement de ces liaisons électriques sur l'une et/ou l'autre face dudit corps d'épreuve.

Le circuit magnétique permettant de produire l'induction magnétique sur la bobine se compose alors d'un aimant permanent, aimanté transversalement et muni de deux pièces polaires qui s'étendent parallèlement à une face du corps d'épreuve et à faible distance de celle-ci. Ce circuit magnétique se trouve rebouclé par une armature qui s'étend parallèlement à l'autre face du corps.

D'une façon plus précise, les susdites bobines comprennent deux zones rectilignes opposées, perpendiculaires à l'axe sensible du capteur et parcourues par un courant circulant en sens opposé. Dans ce cas, les susdites pièces polaires sont agencées de manière à couvrir respectivement ces deux zones rectilignes, de manière à ce que les forces engendrées au niveau de ces deux zones rectilignes sur le corps d'épreuve par la circulation du courant dans la bobine, s'exercent en direction de l'axe sensible et dans un même sens.

Des modes de réalisation de l'invention seront décrits ci-après, à titre d'exemples non limitatifs, avec référence aux dessins annexés dans lesquels :

La figure 1 est une vue en perspective d'une structure pendulaire selon l'invention.

Les figures 2, 3, 4 et 5 représentent, vues de face, quatre variantes de réalisation d'une structure pendulaire équipée de détecteurs capacitifs à déplacement frontal.

Les figures 6 et 7 représentent en perspective schématique deux structures pendulaires équipées d'un détecteur capacitif à déplacement latéral.

La figure 8 est une représentation schématique montrant les deux faces opposées d'une structure pendulaire du type de celle représentée sur la figure 7, équipée d'un détecteur capacitif à déplacement latéral et de deux bobines respectivement montées sur les deux faces du corps d'épreuve.

La figure 9 est un schéma théorique du moteur de rappel équipant la structure pendulaire représentée figure 8.

La figure 10 est une coupe axiale de l'élément pendulaire équipé de son moteur de rappel.

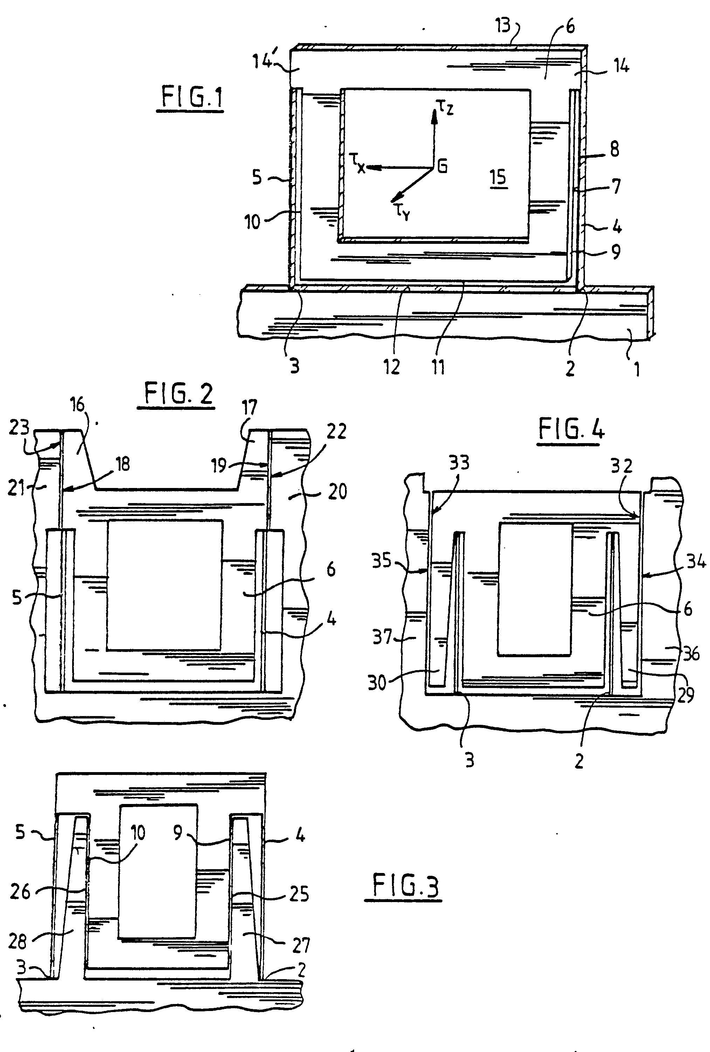

La figure 1 illustre la géométrie de base d'une structure pendulaire selon l'invention. Comme précédemment mentionné, cette structure est plane et peut être réalisée en une seule pièce par micro-usinage d'une lame cristalline en silicium ou en quartz qui peut par ailleurs servir de substrat à un circuit électronique intégré.

Elle se compose d'une partie fixe 1 ou embase sur laquelle se trouvent ancrées les extrémités inférieures ou pieds 2, 3 de deux lames souples parallèles 4, 5 de même longueur, portant par leurs extrémités supérieures un corps d'épreuve 6 de forme sensiblement rectangulaire qui s'étend en grande partie dans le volume compris entre les deux lames souples 4, 5.

Les lames souples 4, 5 présentent, dans le plan de la structure, une largeur aussi faible que possible. Leur épaisseur est celle de la lame cristalline. En conséquence, ces lames 4, 5 présentent une raideur très faible dans le plan de la structure, tandis qu'elles présentent une raideur relativement importante perpendiculairement à ce plan. L'axe sensible τx de cette structure est donc situé dans le plan de la structure et est perpendiculaire aux lames souples 4, 5.

Dans la suite de la description, les parois des différents éléments situées dans le sens de l'épaisseur de la lame et obtenues pour la plupart par électro-usinage, seront désignées par « tranches ».

Ainsi, par exemple, chacune des lames souples 4, 5 comprendra deux tranches parallèles, à savoir une tranche intérieure 7 orientée vers le corps d'épreuve 6 et une tranche extérieure 8 orientée vers l'extérieur.

De même, le corps d'épreuve 6 comprend deux tranches latérales 9, 10 s'étendant parallèlement aux tranches intérieures des lames souples 4, 5, une tranche longitudinale intérieure 11 reliant les deux tranches latérales 9, 10 parallèlement à une tranche intérieure correspondante 12 de la partie fixe 1 de la structure, et une tranche longitudinale extérieure 13 située légèrement au-delà des extrémités des lames souples 4, 5. La liaison des lames souples 4, 5 sur le corps d'épreuve 6 s'effectue par l'intermédiaire de deux décrochements latéraux 14, 14' prévus sur le corps d'épreuve 6 pour déterminer l'écartement entre les lames souples 4, 5 et les tranches latérales 9, 10 du corps d'épreuve 6.

Comme on peut le voir sur cette figure, la structure pendulaire peut être obtenue en réalisant dans la lame cristalline un évidement en forme de U formant les tranches intérieures 7 des lames souples 4, 5, les deux tranches latérales 9, 10 et la tranche longitudinale intérieure 11 du corps d'épreuve 6 ainsi que la tranche intérieure 12 de la partie fixe 1 de la structure.

D'une façon analogue, les tranches extérieures 8 des lames souples 4, 5 et la tranche longitudinale extérieure 13 du corps d'épreuve 6 peuvent être obtenues par une découpe en forme de U inversé.

Dans l'exemple représenté figure 1, le corps d'épreuve 6 comprend en outre un évidement rectangulaire 15 servant à alléger la structure.

La géométrie de cette structure pendulaire présente l'avantage de rapprocher autant que possible le centre de gravité G du corps d'épreuve des pieds 2, 3 des lames souples 4, 5.

Bien entendu, l'invention ne se limite pas à la forme de la structure pendulaire représentée sur la figure 1. Celle-ci peut notamment être adaptée pour permettre le montage de détecteurs capacitifs.

D'une façon générale, ces détecteurs font nécessairement intervenir au moins deux armatures de condensateur mobiles l'une par rapport à l'autre, l'une étant portée par le corps d'épreuve 6 et l'autre étant solidaire de la partie fixe 1 de la structure pendulaire, ces deux armatures étant agencées de telle manière qu'un déplacement du corps d'épreuve 6 selon son axe de mesure τx entraîne une variation correspondante de la capacité, la mesure de cette variation de capacité permettant de déterminer l'amplitude du déplacement du corps d'épreuve 6 et, en conséquence, de la composante de l'accélération selon l'axe de mesure τx.

Deux types de détecteurs capacitifs peuvent être utilisés pour équiper la structure pendulaire précédemment décrite, à savoir :

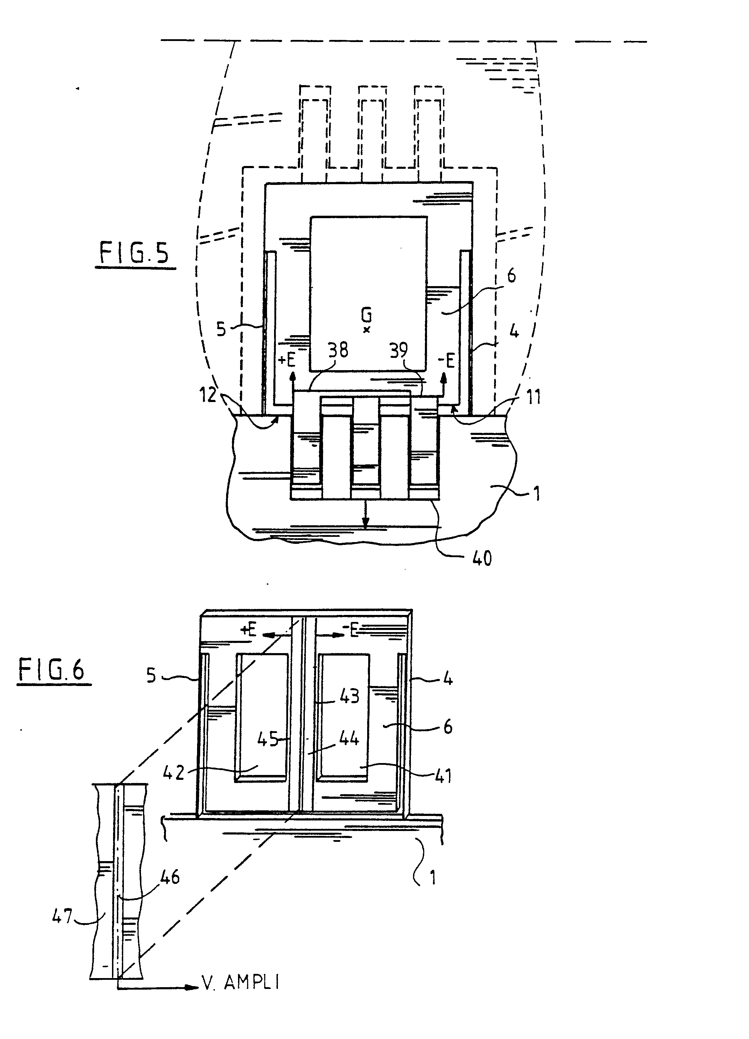

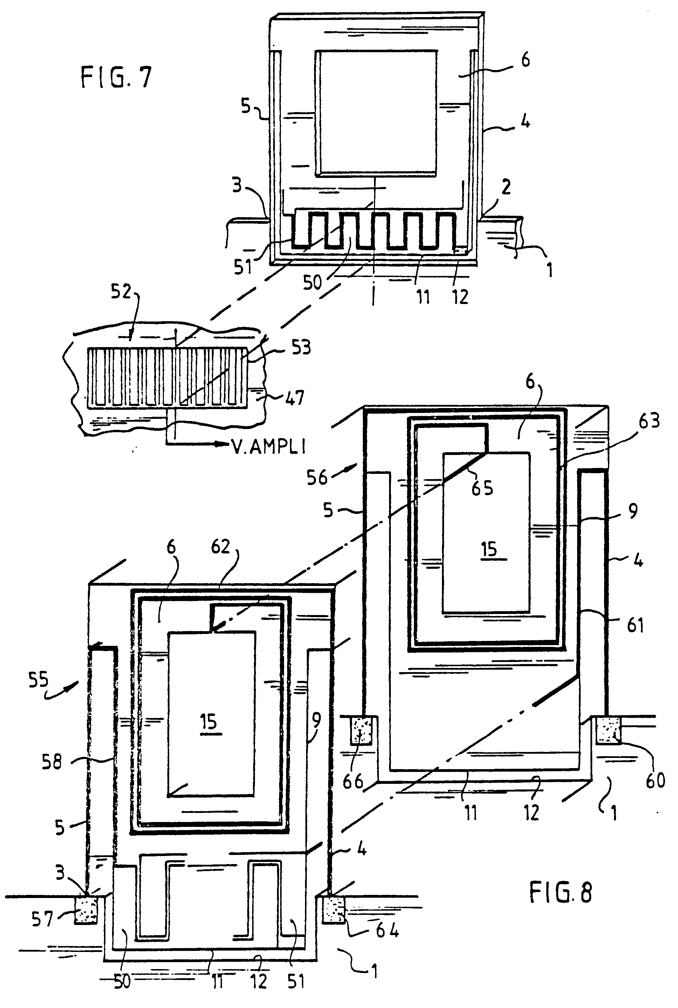

les détecteurs à déplacements frontaux tels que ceux représentés sur les figures 2 à 5 qui font intervenir au moins deux armatures parallèles, perpendiculaires à l'axe sensible τx de la structure pendulaire et dont l'écartement et, en conséquence, la capacité varient en fonction des déplacements du corps d'épreuve 6, et

les détecteurs à déplacements latéraux tels que ceux représentés sur les figures 6 et 7 qui font intervenir au moins deux armatures parallèles à l'axe de mesure τx ; dans ce cas, l'écartement entre les deux armatures est constant et le déplacement du corps d'épreuve 6 provoque un décalage de l'une des armatures par rapport à l'autre et, en conséquence, une variation de la capacité.

Dans l'exemple représenté sur la figure 2, les côtés latéraux du corps d'épreuve comprennent deux prolongements 16, 17 s'étendant vers l'extérieur, au-delà des points de jonction des lames souples 4, 5 avec le corps d'épreuve 6. Ces deux prolongements latéraux 16, 17 comprennent chacun une tranche rectiligne 18, 19 perpendiculaire à l'axe sensible τx de la structure et s'étendant sensiblement dans le plan de la lame souple correspondante. Ces tranches 18, 19 sont métallisées et forment deux armatures de condensateur.

Par ailleurs, la partie fixe 1 comprend deux ailes 20, 21 présentant, parallèlement aux tranches métallisées 18, 19 et au droit de celles-ci, deux tranches métallisées respectives 22, 23 formant deux armatures de condensateur associées aux armatures formées par les tranches 18, 19.

Dans ce cas, la liaison électrique entre les tranches métallisées 18, 19 et le circuit porté par la partie fixe 1 s'effectue par métallisation des faces minces des lames souples 4, 5 délimitées par les tranches 7, 8.

Le détecteur capacitif équipant la structure pendulaire représentée sur la figure 3 fait intervenir deux armatures formées par la métallisation des deux tranches latérales intérieures 9, 10 du corps d'épreuve 6, ces deux armatures coopérant avec deux armatures respectives formées par la métallisation de tranches parallèles correspondantes 25, 26 de deux ailes 27, 28 de la partie fixe

1 de la structure pendulaire qui s'étendent respectivement dans l'espace compris entre les deux lames souples 4, 5 et les tranches latérales intérieures 9, 10 du corps d'épreuve 6.

Dans l'exemple représenté figure 4, le corps d'épreuve 6 comprend deux prolongements latéraux 29, 30 s'étendant à l'extérieur, au-delà des points de jonction des lames souples 4, 5 et du corps d'épreuve 6, et venant en retour vers les points d'ancrage 2, 3 desdites lames souples 4, 5 sur la partie fixe 1 de la structure pendulaire.

Dans ce cas, ces deux prolongements latéraux comprennent des tranches latérales extérieures 32, 33 perpendiculaires à l'axe sensible τx de la structure pendulaire. Ces tranches 32, 33 sont métallisées pour former des armatures de condensateur qui coopèrent avec des tranches métallisées parallèles correspondantes 34, 35 de deux ailes latérales extérieures 36, 37 de la partie fixe 1 de la structure pendulaire.

Dans l'exemple représenté figure 5, la tranche longitudinale intérieure 11 du corps d'épreuve 6 et la tranche intérieure correspondante 12 de la partie fixe 1 de la structure pendulaire présentent des formes en créneaux, les créneaux de l'une de ces tranches s'engageant dans les intervalles entre les créneaux de l'autre tranche.

Les fronts montants et descendants des créneaux de ces deux tranches 11, 12 sont alors métallisés pour former des armatures de condensateur, les fronts montants métallisés de l'une des deux tranches coopérant avec les fronts descendants métallisés de l'autre tranche, pour former des condensateurs plans dont la capacité varie en fonction des déplacements du corps d'épreuve.

La figure 5 montre un mode d'exécution des connexions des armatures de ces condensateurs. Selon ce mode d'exécution, les fronts descendants métallisés de la tranche longitudinale inférieure 11 du corps d'épreuve 6 se trouvent reliés à une source de tension alternative + E par des conducteurs 38, tandis que les fronts montants métallisés de cette tranche sont raccordés par des conducteurs 39 à une source de tension alternative — E, en opposition de phase avec la source de tension + E. Le recueil de la tension d'écart s'effectue sur les fronts montants et descendants métallisés de la tranche intérieure 12 de la partie fixe de la structure pendulaire, qui sont connectés en parallèle au moyen d'un conducteur 40.

L'avantage de la structure précédemment décrite, consiste tout d'abord en ce qu'elle permet de placer le centre de gravité G du corps d'épreuve exactement au milieu de la longueur des lames flexibles 4, 5 (ce qui permet, sous l'influence d'une accélération transversale τy, un déplacement du corps d'épreuve 6 parallèlement à lui-même) ou même encore plus près des pieds 2, 3 des lames flexibles 4, 5, ce qui permet une diminution des contraintes exercées sur lesdites lames 4, 5, lorsque le corps d'épreuve 6 se trouve soumis à une accélération transversale τy. Cette solution permet par ailleurs une augmentation notable de la surface des détecteurs et,

en conséquence, un accroissement de la sensibilité. Elle permet en outre une réduction des distances entre les zones de détection et le circuit d'amplification du signal d'écart, et, en conséquence, une diminution des risques de perturbation.

Bien entendu, la tranche longitudinale du corps d'épreuve, opposée à la tranche longitudinale intérieure 11, et une tranche correspondante de la partie fixe peuvent également présenter des formes en créneaux s'interpénétrant mutuellement. Dans ce cas, d'une façon analogue, les fronts montants et descendants de ces créneaux peuvent être alors métallisés pour former des armatures de condensateur. Cette solution, qui est indiquée en traits interrompus sur la figure 5, permet d'obtenir une augmentation notable des surfaces de détection et, en conséquence, un accroissement de la sensibilité.

Comme précédemment mentionné, les détecteurs capacitifs équipant la structure pendulaire selon l'invention peuvent être du type à déplacement latéral.

La figure 6 fournit un exemple de réalisation d'un tel détecteur dans une structure pendulaire du type de celle représentée figure 1, mais dans laquelle le corps d'épreuve 6 comprend deux évidements centraux 41, 42 séparés par une bande centrale 43 sensiblement parallèle aux lames souples 4, 5.

Cette bande centrale 43 porte d'un côté deux plages conductrices parallèles 44, 45 légèrement distantes l'une de l'autre et pouvant être réalisées par métallisation à plat. Ces deux plages conductrices 44, 45 qui constituent deux armatures de condensateur, coopèrent avec une plage conductrice 46, parallèle au plan du corps d'épreuve 6 et écartée de celui-ci d'une distance par exemple de l'ordre de quelques centièmes de millimètres. Cette plage conductrice 46 est portée par un bâti 47 solidaire de la partie fixe 1 de la structure pendulaire.

Au repos, la plage conductrice 46 est centrée dans le plan médian de symétrie des deux plages conductrices 44, 45, de sorte que lors d'un déplacement du corps d'épreuve 6 dans son plan, la capacité du condensateur plan formé par la plage conductrice 46 et l'une des deux plages conductrices 44, 45 du corps d'épreuve va croître, tandis que la capacité du condensateur plan formé par la plage conductrice 46 et l'autre plage conductrice 44, 45 du corps d'épreuve 6 va décroître.

Dans cet exemple, les plages 44 et 45 sont respectivement raccordées à deux sources de tension alternative en opposition de phase + E et — E, tandis que la plage 46 est raccordée à un circuit d'amplification et de détection du signal d'écart.

Dans l'exemple représenté sur la figure 7, la tranche longitudinale intérieure 12 de la partie fixe 1 de la structure pendulaire se trouve en dessous des points d'ancrage 2, 3 ou pieds des lames souples 4, 5. Par ailleurs, le corps d'épreuve 6 comprend, au voisinage de cette tranche 12, une zone sur laquelle est réalisée une pluralité de couples de plages conductrices du type des plages 44, 45 utilisées dans la structure pendulaire représentée sur la figure 6. Ces couples de plages conductrices sont connectés en parallèle et forment deux circuits crénelés 50, 51 dont les créneaux sont entremêlés. L'un de ces circuits 50 est raccordé à une source de tension alternative + E, tandis que l'autre circuit 51 est connecté à une source de tension alternative — E en opposition de phase avec la source + E.

Ces couples de plages conductrices coopèrent chacun avec une plage conductrice correspondante portée par un bâti 47 d'une façon analogue à celle décrite à propos de la figure 6. Ces plages conductrices qui se présentent sous la forme d'un peigne 53 sont reliées à un circuit d'amplification et de détection du signal d'écart.

Une telle disposition permet d'augmenter le gain du capteur et/ou de diminuer la hauteur de la structure pendulaire pour un gain donné (meilleure utilisation de la surface du substrat).

Elle permet en outre d'équiper les deux faces du corps d'épreuve de deux bobines respectives servant à l'asservissement du capteur, comme cela sera décrit dans la suite de la description. Bien entendu, elle autorise, comme dans le cas des modes de réalisation représentés sur les figures 5 et 6, un positionnement à la demande du centre de gravité G du corps d'épreuve.

La figure 8 illustre un mode de réalisation des connexions d'un capteur du type de celui représenté figure 7, dont le corps d'épreuve est équipé de deux bobines (une par face 55, 56).

Dans cet exemple, le circuit crénelé 50 du détecteur capacitif est relié à une plage de connexion 57 située sur la partie fixe 1 de la structure pendulaire au moyen d'une liaison électrique prévue sur la face avant de la structure pendulaire et comprenant une bande conductrice 58 s'étendant à plat sur la bordure latérale du corps d'épreuve 6 ou même éventuellement sur la tranche 10 de celui-ci, cette bande conductrice étant reliée à l'une des faces minces métallisée de la lame souple 5, elle-même connectée, au niveau du pied 3, à la plage de connexion 57. D'une façon analogue, le circuit crénelé 51 du détecteur capacitif est relié à une plage de connexion 60 prévue sur la face arrière 56 de la partie fixe de la structure pendulaire au moyen d'une liaison électrique comprenant une bande conductrice 61 s'étendant sur la bordure latérale de la face arrière 56 du corps d'épreuve 6 ou même sur la tranche 9 de celui-ci, cette bande conductrice étant reliée à l'une des faces minces métallisée de la lame souple 4, elle-même connectée, au niveau du pied 2, à la plage de connexion 60.

Par ailleurs, les deux faces du corps d'épreuve 6 comprennent chacune une bobine de moteur de rappel 62, 63 réalisée par exemple par métallisation à plat qui s'étendent à la périphérie du corps d'épreuve 6 autour de l'évidement central 15.

L'extrémité extérieure de la bobine 62 qui s'étend sur la face 55 est reliée à une plage de connexion 64 prévue sur la partie fixe 1 de la structure pendulaire par une liaison électrique formée par exemple par une métallisation de l'autre face mince de la lame souple 4.

L'extrémité intérieure de la bobine 62 est reliée à l'extrémité intérieure de la bobine 63 (située sur l'autre face 56), par un passage de courant 65 formé sur la tranche bordant l'évidement 15.

L'extrémité extérieure de la bobine 63 est quant à elle reliée à une plage de connexion 66 prévue sur la partie fixe 1 de la structure pendulaire, par une liaison électrique formée par exemple par une métallisation de l'autre face mince de la lame souple 5.

Il est clair que les plages de connexion 57, 60, 64, 66 correspondent aux bornes d'entrée/sortie du capteur, les bornes 64, 66 servant pour le moteur de rappel et les bornes 57, 60 à l'excitation du détecteur capacitif.

Bien entendu, l'invention ne se limite pas au mode de connexion précédemment décrit. Ainsi, par exemple, le corps d'épreuve pourrait ne comprendre qu'une seule bobine. En outre, les passages de courant d'une face à l'autre du corps d'épreuve pourraient être réalisés, soit par la tranche, et/ou par des trous métallisés.

On constate que, dans l'exemple représenté sur la figure 8, les deux faces minces de chaque lame souple 4, 5 sont métallisées, ce qui, du point de vue mécanique, constitue un avantage appréciable.

Comme précédemment mentionné, pour leur asservissement, les capteurs accélérométriques précédemment décrits nécessitent un moteur de rappel du corps d'épreuve destiné à contrebalancer l'action extérieure. Ce moteur de rappel peut utiliser, d'une manière classique, la force de Laplace obtenue par l'action d'une induction magnétique sur un courant circulant dans au moins une bobine imprimée sur l'une des deux faces du corps d'épreuve.

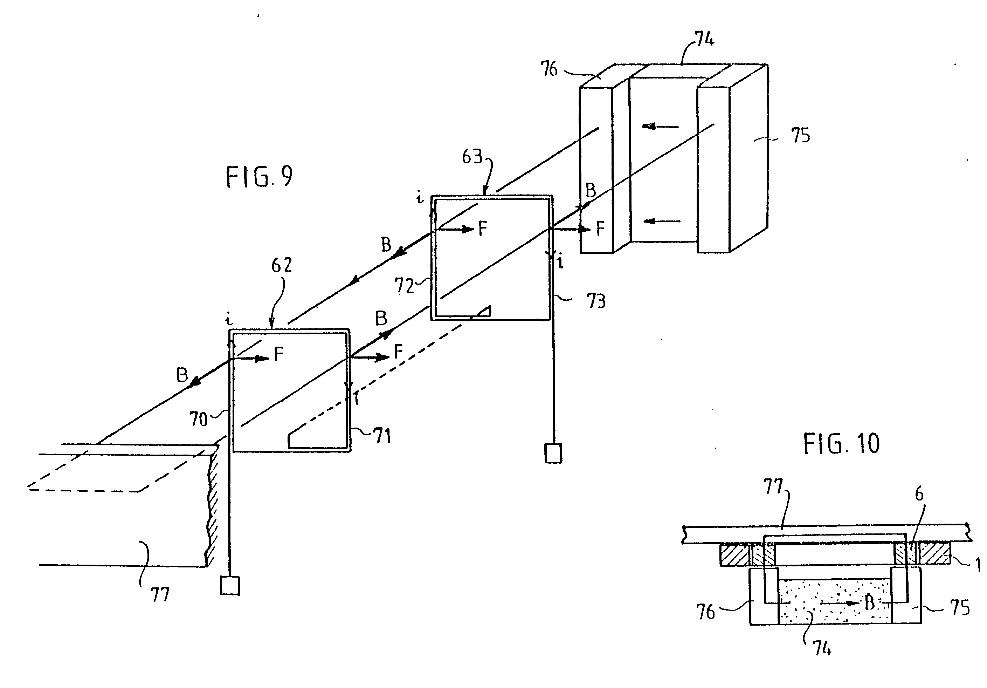

Un mode de réalisation d'un tel moteur de rappel se trouve schématisé sur les figures 9 et 10.

Ce moteur de rappel fait intervenir deux bobines 62, 63 respectivement montées sur les deux faces du corps d'épreuve 6 comme dans le cas de la figure 8. Chacune de ces bobines 62, 63 présente une forme rectangulaire et comprend deux zones latérales 70, 71, 72, 73, dans lesquelles les spires sont rectilignes et parcourues par un courant circulant en sens inverse.

Le circuit magnétique se compose d'un aimant permanent 74, aimanté transversalement, de deux pièces polaires 75, 76 associées à l'aimant 74 et disposées d'un côté du corps d'épreuve 6 au droit des deux zones 70, 72 et 71, 73 des bobines 62, 63, et d'une armature de rebouclage du flux 77 située parallèlement à l'autre face du corps d'épreuve.

Le sens d'enroulement des spires des deux bobines 62, 63 est prévu de manière à ce que les forces de Laplace engendrées par l'induction magnétique B sur les zones 70, 72 et 71, 73 des bobines 62, 63 soient orientées dans le même sens (dans le plan du corps d'épreuve) et s'ajoutant les unes aux autres.

On notera que pour ne pas surcharger le dessin sur la figure 9, il n'a été représenté que deux spires de bobine par face du corps d'épreuve 6. Bien entendu, en pratique, le nombre de spires de ces bobines peut être beaucoup plus élevé.

Le métal déposé sur la structure pendulaire pour former les circuits électriques (bobines, détecteurs capacitifs, liaisons, etc...) peut consister en de l'or ou un alliage d'or tel qu'un alliage chrome-or par exemple. Toutefois, selon un mode de réalisation avantageux de l'invention, ces circuits sont, de préférence, réalisés en argent ou en aluminium, métaux qui présentent notamment une meilleure conductibilité électrique et une masse spécifique plus faible.

Le capteur accélérométrique précédemment décrit peut être logé dans un boîtier comprenant un socle et un couvercle. Dans ce cas, l'ensemble constitué par l'aimant permanent et les pièces polaires peut être solidaire du socle, tandis que l'armature de rebouclage du flux peut être portée par le boîtier. Une telle disposition permet de simplifier considérablement l'assemblage du capteur.

### Revendications

1. Capteur accélérométrique comprenant une structure pendulaire comportant une partie fixe (1) plane et un corps d'épreuve plat (6) suspendu sur ladite partie fixe par deux lames parallèles (4, 5) flexibles dans le plan dudit corps d'épreuve, de manière à pouvoir se déplacer en translation selon un axe ($\tau$x) le long duquel on mesure l'accélération, ledit corps d'épreuve (6) s'étendant au moins partiellement dans l'espace compris entre les deux lames flexibles (4, 5), caractérisé en ce que la susdite partie fixe (1), le susdit corps d'épreuve (6) et les susdites lames flexibles (4, 5) sont réalisés en une seule et même pièce obtenue par micro-usinage d'une lame cristalline, et en ce qu'en conséquence, ladite partie fixe (1), ledit corps d'épreuve (6) et lesdites lames flexibles (4, 5) s'étendent dans un même plan contenant ledit axe ($\tau$x).

2. Capteur accélérométrique selon la revendication 1, caractérisé en ce que le centre de gravité (G) du corps d'épreuve (6) est situé dans la zone comprise entre les deux lames flexibles (4, 5).

3. Capteur accélérométrique selon l'une des revendications précédentes, caractérisé en ce que la susdite structure pendulaire est réalisée par micro-usinage d'une lame cristalline.

4. Capteur accélérométrique selon l'une des revendications précédentes, caractérisé en ce que le susdit corps d'épreuve (6) s'étend au-delà des points d'ancrage (2, 3) des lames flexibles (4, 5) sur la partie fixe (1) de la structure pendulaire, à l'opposé des points de liaison desdites lames (4, 5) sur le corps d'épreuve (6).

5. Capteur accélérométrique selon l'une des revendications précédentes, caractérisé en ce que le susdit corps d'épreuve (6) comprend au moins un évidement central (15).

6. Capteur selon l'une des revendications précédentes, caractérisé en ce qu'il comprend un détecteur capacitif frontal comprenant au moins une première armature de condensateur portée par au moins une zone de la tranche du corps d'épreuve (6), sensiblement perpendiculaire à l'axe sensible du capteur, et une deuxième armature de condensateur portée par au moins une zone de la tranche de la partie fixe (1) de l'élément pendulaire, parallèle à la première armature et faiblement distante de celle-ci.

7. Capteur selon l'une des revendications précédentes, caractérisé en ce que les côtés latéraux du corps d'épreuve (6) comprennent au moins un prolongement latéral (16, 17) s'étendant vers l'extérieur, au-delà des points de jonction des lames souples (4, 5) avec le corps d'épreuve (6), en ce que ce prolongement latéral comprend au moins une tranche métallisée rectiligne (18, 19) perpendiculaire à l'axe sensible de la structure pendulaire, et en ce que la partie fixe (1) de la structure pendulaire comprend au moins une tranche rectiligne métallisée (22, 23) parallèle à la tranche métallisée (18, 19) du corps d'épreuve (6) et formant avec celle-ci un condensateur plan dont la capacité varie en fonction de la position du corps d'épreuve.

8. Capteur selon la revendication 7, caractérisé en ce que le prolongement latéral du corps d'épreuve vient en retour vers les points d'ancrage (2, 3) des lames souples (4, 5) sur la partie fixe de la structure.

9. Capteur selon l'une des revendications 1 à 6, caractérisé en ce que l'une au moins des deux tranches latérales intérieures (9, 10) du corps d'épreuve est métallisée et coopère avec une tranche métallisée correspondante (25, 26) d'au moins une aile (27, 28) de la partie fixe (1) de la structure pendulaire qui s'étend dans l'espace compris entre ladite tranche latérale (9, 10) du corps d'épreuve (6) et une lame souple (4, 5) correspondante, ces deux tranches métallisées formant un condensateur plan dont la capacité varie en fonction de la position du corps d'épreuve (6).

10. Capteur selon l'une des revendications 1 à 6, caractérisé en ce que la tranche longitudinale intérieure (11) du corps d'épreuve et la tranche intérieure correspondante (12) de la partie fixe (1) de la structure pendulaire présentent des formes en créneaux, les créneaux de l'une de ces deux tranches s'engageant dans les intervalles entre les créneaux de l'autre tranche, et en ce que les fronts montants et descendants de ces deux tranches (11, 12) sont métallisés, de sorte que les fronts montants métallisés de l'une des deux tranches coopèrent avec les fronts descendants métallisés de l'autre tranche pour former autant de condensateurs plans dont la capacité varie en fonction de la position du corps d'épreuve (6).

11. Capteur selon l'une des revendications précédentes, caractérisé en ce que le corps d'épreuve (6) comprend deux tranches métallisées coopérant respectivement avec deux tranches métallisées de la partie fixe (1) de la structure pendulaire pour former au moins deux condensateurs plans, et en ce que les tranches métallisées du corps d'épreuve (6) sont reliées à deux sources de courant alternatif (+ E, — E) respectives en opposition de phase, tandis que les deux tranches métallisées de la partie fixe (1) de la structure pendulaire sont connectées à un circuit d'amplification et de détection.

12. Capteur selon l'une des revendications 1 à 5, caractérisé en ce qu'il comprend au moins un détecteur capacitif latéral comprenant au moins une première armature de condensateur (44, 45) portée par l'une des faces du corps d'épreuve (6) et au moins une seconde armature de condensateur (46) parallèle à la première armature (44, 45) et faiblement distante de celle-ci, cette seconde armature (46) étant portée par un bâti (47) solidaire de la partie fixe (1) de la structure pendulaire.

13. Capteur selon la revendication 12, caractérisé en ce que le corps d'épreuve (6) comprend au moins un couple de plages conductrices (44, 45) constituant deux armatures de condensateur qui coopèrent avec une plage conductrice (46) parallèle portée par ledit bâti (47).

14. Capteur selon la revendication 13, caractérisé en ce que le corps d'épreuve (6) comprend une pluralité de couples de plages conductrices connectés en parallèle et formant deux circuits crénelés (50, 51) dont les créneaux sont entremêlés, et en ce que ces couples de plages conductrices coopèrent chacun avec une plage conductrice correspondante (52) portée par le susdit bâti (47).

15. Capteur selon la revendication 14, caractérisé en ce que les deux susdits circuits crénelés (50, 51) sont respectivement reliés à deux sources de tension alternative en opposition de phase, et en ce que les plages conductrices (52) portées par le bâti (47) sont reliées à un circuit d'amplification et de détection.

16. Capteur selon l'une des revendications précédentes, caractérisé en ce que le susdit corps d'épreuve (6) porte sur au moins l'une de ses faces une bobine plate (62, 63) faisant partie d'un moteur de rappel utilisé pour l'asservissement du capteur.

17. Capteur selon l'une des revendications précédentes, caractérisé en ce qu'il comprend deux bobines plates (62, 63) respectivement montées sur les deux faces du corps d'épreuve (6), ces deux bobines étant montées en série et reliées l'une à l'autre par au moins un élément conducteur passant d'une face à l'autre du corps d'épreuve (6).

18. Capteur selon la revendication 17, caractérisé en ce que le susdit élément conducteur consiste en un trou métallisé ou une zone métallisée de la tranche du corps d'épreuve (6).

19. Capteur selon l'une des revendications précédentes, caractérisé en ce qu'il comprend un moteur de rappel faisant intervenir au moins une bobine plate (62, 63) portée par l'une des faces du corps d'épreuve (6), cette bobine comprenant au moins deux zones rectilignes opposées (70, 71, 72, 73) perpendiculaires à l'axe sensible du capteur et un circuit magnétique comprenant une première partie constituée par un aimant permanent (74) associé à deux pièces polaires (75, 76) respectivement disposées au droit des deux zones rectilignes (70, 72, 73, 71) de la bobine (62, 63), d'un même côté du corps d'épreuve (6), et une deuxième partie consistant en une armature de retour du flux (77) située de l'autre côté du corps d'épreuve.

20. Capteur selon la revendication 19, caractérisé en ce que l'une des deux parties du circuit magnétique est fixée à un socle portant la structure pendulaire, tandis que l'autre partie est solidaire d'un couvercle venant se fixer sur ledit socle.

21. Capteur selon l'une des revendications précédentes, caractérisé en ce que les connexions électriques entre le corps d'épreuve (6) et la partie fixe (1) de la structure pendulaire sont réalisées par des plages conductrices formées sur les faces minces des lames souples (4, 5).

22. Capteur selon l'une des revendications précédentes, caractérisé en ce que les circuits électriques formés par métallisation sur la structure pendulaire sont en argent ou en aluminium.

**Claims**

1. An accelerometer sensor comprising a pendular structure with a flat fixed part (1) and a flat test body (6) suspended from said fixed part by two parallel blades (4, 5) flexible in the plane of said test body, so as to be able to move in translation along an axis (τx) along which the acceleration is measured, said test body (6) extending at least partially into the space between the two flexible blades (4, 5), characterized in that said fixed part (1), said test body (6) and said flexible blades (4, 5) are made from one and the same piece obtained by micro-machining from a crystalline wafer and in that, consequently, said fixed part (1), said test body (6) and said flexible blades (4, 5) extend in the same plane containing said axis (τx).

2. The accelerometer sensor as claimed in claim 1, wherein the center of gravity (G) of the test body (6) is situated in the zone between said two flexible blades (4, 5).

3. The accelerometer structure as claimed in one of the preceding claims, wherein said pendular structure is formed by micro-machining from a crystalline wafer.

4. The accelerometer sensor as claimed in one of the preceding claims, wherein said test body (6) extends beyond the points (2, 3) at which said flexible blades (4, 5) are anchored to said fixed part (1) of the pendular structure, on the side opposite the connection points of said blades (4, 5) to said test body (6).

5. The accelerometer sensor as claimed in one of the preceding claims, wherein said test body (6) comprises at least one central recess (15).

6. The sensor as claimed in one of the preceding claims, further comprising a frontal capacitive detector having at least a first capacitor plate carried by at least one zone of the edge of the test body (6), substantially perpendicular to the sensitive axis of the sensor, and a second capacitor plate carried by at least one zone of the edge of the fixed part (1) of the pendular element, parallel to the first plate and at a small distance therefrom.

7. The sensor as claimed in one of the preceding claims, wherein the lateral sides of the test body (6) comprise at least one lateral extension (16, 17) extending outwardly, beyond the points at which said flexible blades (4, 5) are joined to said test body (6), said lateral extension comprises at least one rectilinear metallized edge (18, 19) perpendicular to the sensitive axis of the pendular structure, and the fixed part (1) of said pendular structure comprises at least one metallized rectilinear edge (22, 23) parallel to the metallized edge (18, 19) of said test body (6) and forming therewith a flat capacitor whose capacity varies depending on the position of said test body.

8. The sensor as claimed in claim 7, wherein said lateral extension of the test body comes back towards the points (2, 3) at which said flexible blades (4, 5) are anchored to said fixed part of the structure.

9. The sensor as claimed in one of the claims 1 to 6, wherein one at least of the two inner lateral edges (9, 10) of said test body is metallized and cooperates with a corresponding metallized edge (25, 26) of at least one wing (27, 28) of the fixed part (1) of said pendular structure which extends into the space between said lateral edge (9, 10) of the test body (6) and a corresponding flexible blade (4, 5), said two metallized edges forming a flat capacitor whose capacity varies depending on the position of the test body (6).

10. The sensor as claimed in one of claims 1 to 6, wherein the inner longitudinal edge (11) of the test body and the corresponding inner edge (12) of said fixed part (1) of the pendular structure have shapes with square indentations, the square projections of one of these two edges engaging in the indentations of the other edge, and the rising and falling fronts of these two edges (11, 12) are metallized so that the metallized rising fronts of one of the two edges cooperate with the metallized falling fronts of the other edge so as to form as many flat capacitors whose capacity varies depending on the position of said test body (6).

11. The sensor as claimed in one of the preceding claims, wherein the test body (6) comprises two metallized edges cooperating respectively with two metallized edges of said fixed part (1) of the pendular structure so as to form at least two flat capacitors and the metallized edges of said test body (6) are connected to two respective AC current sources (+ E, — E) in phase opposition, whereas the two metallized edges of said fixed part (1) of the pendular structure are connected to a detection and amplification circuit.

12. The sensor as claimed in one of claims 1 to 5, comprising at least one lateral capacitive detector with at least a first capacitor plate (44, 45) carried by one of the faces of the test body (6) and at least a second capacitor plate (46) parallel to the first plate (44, 45) and at a small distance therefrom, said second plate (46) being carried by a frame (47) secured to the fixed part (1) of the pendular structure.

13. The sensor as claimed in claim 12, wherein said test body (6) comprises at least a pair of conducting areas (44, 45) forming two capacitor plates which cooperate with a parallel conducting area (46) on said frame (47).

14. The sensor as claimed in claim 13, wherein said test body (6) comprises a plurality of pairs of conducting areas connected in parallel and forming two indented circuits (50, 51) whose indentations are intermingled, and said pairs of conducting areas each cooperate with a corresponding conducting area (52) on said frame (47).

15. The sensor as claimed in claim 14, wherein said two indented circuits (50, 51) are connected respectively to two AC voltage sources in phase opposition, and the conducting areas (52) on said frame (47) are connected to a detection and amplification circuit.

16. The sensor as claimed in one of the preceding claims, wherein said test body (6) has on at least one of its faces a flat coil (62, 63) forming part of a return motor used for servo-controlling the sensor.

17. The sensor as claimed in one of the preceding claims, further comprising two flat coils (62, 63) mounted respectively on the two faces of said test body (6), said two coils being mounted in series and connected to each other by at least one conducting element passing from one face to the other of said test body (6).

18. The sensor as claimed in claim 17, wherein said conducting element consists of a metallized hole or a metallized zone on the edge of said test body (6).

19. The sensor as claimed in one of the preceding claims, comprising a return motor having at least one flat coil (62, 63) on one of the faces of said test body (6), said coil comprising at least two opposite rectilinear zones (70, 71, 72, 73) perpendicular to the sensitive axis of the sensor and a magnetic circuit comprising a first part formed by a permanent magnet (74) associated with two pole pieces (75, 76) disposed respectively at right angles to said two rectilinear zones (70, 72, 73, 71) of said coil (62, 63) on the same side of the test body (6) and a second part consisting of a flux return armature (77) situated on the other side of said test body.

20. The sensor as claimed in claim 19, wherein one of the two parts of said magnetic circuit is fixed to a base supporting the pendular structure, whereas the other part is secured to a cover which is fixable on said base.

21. The sensor as claimed in one of the preceding claims, wherein the electric connections between the test body (6) and the fixed part (1) of the pendular structure are formed by conducting areas formed on the thin faces of said flexible blades (4, 5).

22. The sensor as claimed in one of the preceding claims, wherein the electric circuits formed by metallization on the pendular structure are made from silver or aluminium.

**Patentansprüche**

1. Beschleunigungsaufnehmer mit einem pendelartigen Aufbau, versehen mit einem flachen stationären Teil (1) und einem flachen Testkörper (6), der an besagtem stationären Teil durch zwei parallele Lamellen (4, 5) aufgehängt ist, die in der Ebene des besagten Testkörpers elastisch sind, sodass sie, gemäss der Achse ($\tau$x) verschoben werden können entlang welcher die Beschleunigung gemessen wird, wobei besagter Testkörper (6) wenigstens teilweise in den Bereich zwischen den beiden elastischen Lamellen (4, 5) hineinreicht, dadurch gekennzeichnet, dass besagter stationärer Teil (1), besagter Testkörper (6) und besagte elastische Lamellen (4, 5) aus ein und demselben Stück gefertigt sind, das man durch Mikro-Materialbearbeitung aus einem Kristallplättchen erhält und dass infolgedessen besagter stationärer Teil (1), besagter Testkörper (6) und besagte elastische Lamellen (4, 5) in der gleichen Ebene in der besagte Ache ($\tau$x) verläuft angeordnet sind.

2. Beschleunigungsaufnehmer nach Anspruch 1, dadurch gekennzeichnet, dass der Schwerpunkt (G) des Testkörpers (6) im Bereich zwischen den beiden elastischen Lamellen (4, 5) liegt.

3. Beschleunigungsaufnehmer nach einem der vorhergehenden Ansprüche, dadurch gekennzeichnet, dass man besagten pendelartigen Aufbau durch Mikromaterialbearbeitung aus einem Kristallplättchen erhält.

4. Beschleunigungsaufnehmer nach einem der vorhergehenden Ansprüche, dadurch gekennzeichnet, dass besagter Testkörper (6) sich über die Punkte (2, 3) hinaus erstreckt, an denen die elastischen Lamellen (4, 5) am stationären Teil (1) des pendelartigen Aufbaus verankert sind, gegenüber den Befestigungspunkten besagter Lamellen (4, 5) am Testkörper (6).

5. Beschleunigungsaufnehmer nach einem der vorhergehenden Ansprüche, dadurch gekennzeichnet, dass besagter Testkörper (6) mindestens eine zentrale Aussparung (15) besitzt.

6. Aufnehmer nach einem der vorhergehenden Ansprüche, dadurch gekennzeichnet, dass er einen frontalen kapazitiven Detektor enthält, mit mindestens einem ersten Kondensatorbelag, getragen von mindestens einem Bereich der Kante des Testkörpers (6), der im wesentlichen senkrecht zur Achse des Aufnehmers verläuft, und einem zweiten Kondensatorbelag, getragen von mindestens einem Bereich des Randes des stationären Teils (1) des pendelartigen Aufbaus, der parallel zum ersten Belag und in geringer Entfernung von diesem angeordnet ist.

7. Aufnehmer nach einem der vorhergehenden Ansprüche, dadurch gekennzeichnet, dass die Seitenflächen des Testkörpers (6) mindestens eine seitliche Verlängerung (16, 17) aufweisen, die sich nach aussen hin erstreckt, über die Verbindungsstellen der elastischen Lamellen (4, 5) mit dem Testkörper (6) hinaus, dass besagte seitliche Verlängerung mindestens eine gradlinige metallisierte Kante (18, 19) aufweist, senkrecht zur sensiblen Ache des pendelartigen Aufbaus, und dass der stationäre Teil (1) des pendelartigen Aufbaus mindestens eine gradlinige metallisierte Kante (22, 23) aufweist, die parallel zur metallisierten Kante (18, 19) des Testkörpers (6) verläuft und mit dieser einen flachen Kondensator bildet, dessen Kapazität je nach der Position des Körpers schwankt.

8. Aufnehmer nach Anspruch 7, dadurch gekennzeichnet, dass die seitliche Verlängerung des Testkörpers in Richtung auf die Punkte (2, 3) wo die elastischen Lamellen (4, 5) am stationären Teil des Aufbaus verankert sind zurückverläuft.

9. Aufnehmer nach einem der Ansprüche 1 bis 6, dadurch gekennzeichnet, dass mindestens eine der beiden inneren Kanten (9, 10) des besagten Testkörpers metallisiert ist und mit einer entsprechenden metallisierten Kante (25, 26) mindestens eines Schenkels (27, 28) des stationären Teils (1) des pendelartigen Aufbaus zusammenarbeitet, die in den Bereich zwischen besagtem seitlichem Rand (9, 10) des Testkörpers (6) und einer entsprechenden elastischen Lamelle (4, 5) hineinreicht, wobei diese beiden metallisierten Kanten einen flachen Kondensator bilden, dessen Kapazität je nach der Position des Testkörpers (6) schwankt.

10. Aufnehmer nach einem der Ansprüche 1 bis 6, dadurch gekennzeichnet, dass der innere Längsrand (11) des Testkörpers und der entsprechende Innenrand (12) des stationären Teils (1) des pendelartigen Aufbaus zinnenartig geformt sind, wobei die Zinnen einer der beiden Ränder in die Zwischenräume zwischen den Zinnen des anderen Randes eingreifen und dass die aufsteigenden und absteigenden- Fronten diesen beiden Ränder (11, 12) metallisiert sind, sodass die metallisierten aufsteigenden Fronten eines der beiden Ränder mit den metallisierten absteigenden Fronten des anderen Randes zusammenarbeiten, um ebensoviele flache Kondensatoren zu bilden, deren Kapazität je nach der Position des Testkörpers (6) schwankt.

11. Aufnehmer nach einem der vorhergehenden Ansprüche, dadurch gekennzeichnet, dass der Testkörper (6) zwei metallisierte Ränder aufweist, die jeweils mit zwei metallisierten Rändern des stationären Teils (1) des pendelartigen Aufbaus zusammenarbeiten, um mindestens zwei flache Kondensatoren zu bilden und dass die metallisierten Ränder des Testkörpers (6) an zwei Wechselstromquellen (+ E, — E) in Phasenopposition angeschlossen sind, während die beiden metallisierten Ränder des stationären Teils (1) des pendelartigen Aufbaus an einen Verstärker- und Detektorkreis angeschlossen sind.

12. Aufnehmer nach einem der Ansprüche 1 bis 5, dadurch gekennzeichnet, dass er mindestens einen seitlichen kapazitiven Detektor enthält, mit mindestens einem ersten Kondensatorbelag (44, 45), getragen von einer der Flächen des Testkörpers (6) und mindestens einen zweiten Kondensatorbelag (46), der parallel zum ersten Belag (44, 45) in geringer Entfernung von diesem angeordnet ist, wobei besagter zweiter Belag (46) von einem fest mit dem stationären Teil (1) des pendelartigen Aufbaus verbundenen Rahmen (47) getragen wird.

13. Aufnehmer nach Anspruch 12, dadurch gekennzeichnet, dass der Testkörper (6) mindestens zwei leitende Flächen (44, 45) aufweist, die zwei Kondensatorbeläge bilden, welche mit einer parallelen, von besagtem Rahmen (47) getragenen leitenden Fläche (46) zusammenarbeiten.

14. Aufnehmer nach Anspruch 13, dadurch gekennzeichnet, dass der Testkörper (6) eine Vielzahl von leitenden Flächen aufweist, die parallelgeschaltet sind und zwei zinnenförmige Kreise (50, 51) bilden, deren Zacken zwischeneinandergreifen, und dass diese leitenden Flächenpaare jeweils mit einer entsprechenden von besagtem Rahmen (47) getragenen Fläche (52) zusammenarbeiten.

15. Aufnehmer nach Anspruch 14, dadurch gekennzeichnet, dass die beiden besagten zinnenförmigen Kreise (50, 51) jeweils an zwei Wechselspannungsquellen in Phasenopposition angeschlossen sind und dass die von Rahmen (47) getragenen leitenden Flächen (52) an einen Detektor- und Verstärkerkreis angeschlossen sind.

16. Aufnehmer nach einem der vorhergehenden Ansprüche, dadurch gekennzeichnet, dass besagter Testkörper (6) auf mindestens einer seiner Flächen eine flache Spule (62, 63) trägt, welche zu einem Rückstellmotor gehört, der den Aufnehmer steuert.

17. Aufnehmer nach einem der vorhergehenden Ansprüche, dadurch gekennzeichnet, dass er zwei Flachspulen (62, 63) aufweist, die jeweils auf den beiden Flächen des Testkörpers (6) angebracht sind, wobei diese beiden Spulen in Reihe montiert und miteinander durch mindestens ein leitendes Element, das von einer Fläche zur anderen des Testkörpers (6) reicht verbunden sind.

18. Aufnehmer nach Anspruch 17, dadurch gekennzeichnet, dass besagtes leitendes Element ein metallisiertes Loch oder ein metallisierter Bereich des Testkörper (6) randes ist.

19. Aufnehmer nach einem der vorhergehenden Ansprüche, dadurch gekennzeichnet, dass er einen Rückstellmotor enthält, mit mindestens einer, von einer der Flächen des Testkörpers (6) getragenen Flachspule (62, 63), wobei besagte Spule mindestens zwei entgegengesetzte gradlinige Bereiche (70, 71, 72, 73) aufweist, die senkrecht zur sensitiven Achse des Aufnehmers verlaufen, und einen Magkreis mit einem ersten Teil, der von einem Dauermagneten (74) gebildet wird, welcher an zwei Polstücke (75, 76) angeschlossen ist, die jeweils im rechten Winkel zu den beiden gradlinigen Bereichen (70, 72, 73, 71) der Spule (62, 63) auf derselben Seite des Testkörpers (6) angeordnet sind und einem zweiten Teil, der aus einem Belag für den Rückfluss (77) besteht und auf der anderen Seite des Testkörpers angeordnet ist.

20. Aufnehmer nach Anspruch 19, dadurch gekennzeichnet, dass einer der beiden Teile des Magnetkreises an einem Sockel befestigt ist, der den pendelartigen Aufbau trägt, während der andere Teil fest mit einer Abdeckung verbunden ist, die auf besagtem Sockel befestigt ist.

21. Aufnehmer nach einer der vorhergehenden Ansprüche, dadurch gekennzeichnet, dass die elektrischen Anschlüsse zwischen dem Testkörper (6) und dem stationären Teil (1) des pendelartigen Aufbaus durch, auf den dünnen Seiten der elastischen Lamellen (4, 5) gebildete leitende Flächen hergestellt werden.

22. Aufnehmer nach einem der vorhergehenden Ansprüche, dadurch gekennzeichnet, dass die auf dem pendelartigen Aufbau durch Metallisation gebildeten elektrischen Schaltkreise aus Silber oder Aluminium sind.

FIG.1

FIG.2

FIG.4

FIG.3

$\underline{\text{FIG.5}}$

$\underline{\text{FIG.6}}$

V. AMPLI

FIG. 7

V.AMPLI

FIG. 8

FIG.9

FIG.10